# EUROPÄISCHE PATENTSCHRIFT

(11) **EP 1 625 957 B1**
(45) Veröffentlichungstag und Bekanntmachung des Hinweises auf die Patenterteilung: **20.06.2012**
(21) Anmeldenummer: 05014941.8
(22) Anmeldetag: 11.07.2005
(51) Int. Cl.: B60H 1/00

(54) **Fahrzeug-Kühlsystem**
Vehicle cooling system
Système de refroidissement d'un véhicule

(30) Priorität: 09.08.2004 DE 102004038790
(43) Veröffentlichungstag der Anmeldung: 15.02.2006
(73) Patentinhaber: Behr GmbH & Co. KG, 70469 Stuttgart (DE)
(72) Erfinder: Burk, Roland, Dipl.-Phys., 70469 Stuttgart (DE); Feuerecker, Günther, Dr. rer. nat., 70567 Stuttgart (DE); Manski, Ralf, Dipl.-Ing., 70197 Stuttgart (DE)

(56) Entgegenhaltungen:
- DE-A1- 19 937 949
- US-A- 5 497 941
- US-A1- 2001 020 529
- US-A1- 2002 184 908

## Beschreibung

Die vorliegende Erfindung betrifft ein Fahrzeug-Kühlsystem nach dem Oberbegriff des Anspruchs 1.

Moderne Kraftfahrzeuge weisen eine Vielzahl von Wärmequellen auf, die auch aus elektrischen Komponenten bestehen können. In besonderem Maße sind solche Wärmequellen bei Fahrzeugen mit elektrischem Antrieb oder bei Hybrid-Fahrzeugen vorhanden. Bei letztgenannten kann die Wärmequelle insbesondere eine Batterie, ein Generator, ein Elektromotor oder eine Leistungselektronik zur Steuerung des elektrischen Antriebs sein. Insbesondere eine solche Leistungselektronik kann dabei Kühlleistungen von mehreren Kilowatt erfordern, wobei oft Kühlmitteltemperaturen von deutlich unter 100 Grad Celsius erforderlich sind. Bei extremen Belastungen und hohen Umgebungstemperaturen kann es vorkommen, dass die Kühlleistung nicht mehr in einem eigenen Niedertemperatur-Kühlkreislauf abgeführt werden kann, so dass die elektrische Leistung begrenzt werden muß.

DE 101 28 164 A1 beschreibt ein Kühlsystem für eine temperaturerhöhende Einrichtung, bei dem ein Wärmetausch sowohl über eine Klimaanlage des Fahrzeugs als auch über einen Zusatzkühler ermöglicht ist.

Die US 2002/0184908 A1 offenbart ein Fahrzeugkühlsystem gemäß dem Oberbegriff von Anspruch 1.

Es ist die Aufgabe der Erfindung, ein Fahrzeug-Kühlsystem anzugeben, bei dem eine zusätzliche Kühlung einer Wärmequelle mittels des Kältekreislaufs der Fahrzeugklimaanlage, im Folgenden kurz mit "Klimaanlage" bezeichnet auf einfache Weise ermöglicht ist.

Diese Aufgabe wird für ein eingangs genanntes Fahrzeug-Kühlsystem erfindungsgemäß mit den kennzeichnenden Merkmalen des Anspruchs 1 gelöst.

Durch die Einstellung der Kühlmittelflüsse mittels eines Regelkreises ist vorteilhaft gewährleistet, dass nur soviel Kühlleistung für die Wärmequelle der Klimaanlage entnommen wird, wie unbedingt erforderlich ist. Vorteilhaft umfaßt der Regelkreis dabei einen Temperatursensor. Dieser kann bevorzugt die Kühlmitteltemperatur unmittelbar vor der Wärmequelle messen und so ein erforderliches zusätzliches Kühlen mittels des zweiten Wärmetauschers einregeln, wofür bevorzugt ein steuerbares Ventil zur Einstellung des Verhältnisses der Kühlmittelflüsse in dem Regelkreis vorgesehen ist. Ein solches Ventil kann beispielsweise ein 3/2-Wegeventil, ein 4/2-Wegeventil oder ein diskretes Schaltventil sein. Das Ventil kann kontinuierlich verstellbar oder auch getaktet ansteuerbar sein. Eine mechanische Steuerung nach Art eines Thermostatventils ist ebenso möglich wie eine elektronische Ansteuerung durch Vergleich des Meßwertes mit einem Sollwert.

Alternativ kann ein Meßwert zur Regelung des Kühlmittelflussverhältnisses auch unmittelbar als gemessene Temperatur der Wärmequelle vorliegen oder auch indirekt aus weiteren Kenngrößen der Wärmequelle wie etwa die durch eine Leistungselektronik fließenden Ströme ermittelt werden. Die Hinzuziehung weiterer Kenngrößen wie etwa der gemessenen Außentemperatur kann je nach Anforderung ebenfalls erfolgen.

Besonders bevorzugt ist der erste Kühlmittelfluß jederzeit größer oder gleich groß wie der zweite Kühlmittelfluß. Hierdurch ist für den Fall, dass die Klimaanlage lediglich einer ergänzenden Kühlung der Wärmequelle dient, ein erfindungsgemäßes Kühlsystem auf einfache Weise ausbildbar.

In einer alternativen Ausführungsform eines erfindungsgemäßen Kühlsystems ist es vorgesehen, dass der Kühlkreislauf in thermischem Kontakt mit einer zweiten Wärmequelle steht. Diese kann je nach Anforderung bevorzugt seriell oder parallel hinsichtlich des Kühlkreislaufs zu der ersten Wärmequelle angeordnet sein. Im Falle der parallelen Anordnung ist vorteilhaft zumindest ein steuerbares Regelventil vorgesehen, mittels dessen der Kühlmittelfluß einstellbar auf die beiden Wärmequellen verteilbar ist.

Weiterhin kann es vorteilhaft vorgesehen sein, dass in dem Kühlkreislauf ein weiterer Wärmetauscher vorgesehen ist, der mit der Klimaanlage nicht in thermischem Kontakt steht. Dies kann allgemein aus Bauraumgründen vorteilhaft sein und insbesondere bei Vorhandensein mehrerer Wärmequellen, insbesondere in paralleler Anordnung. Auf diese Weise kann der Zusatzkühler vornehmlich der Wärmequelle mit der größten Leistung zugeordnet sein.

In einer bevorzugten Ausführungsform des Fahrzeug-Kühlsystems ist es vorgesehen, dass die Klimaanlage einen weiteren Verdampfer umfaßt, wobei der zweite Wärmetauscher an dem weiteren Verdampfer ausgebildet ist Vorteilhaft ist der weitere Verdampfer dem ersten Verdampfer nachgeordnet, wodurch der erste Verdampfer hinsichtlich Kühlleistung und Gleichförmigkeit des Temperaturprofils bevorzugt ist. Hierdurch kann eine Zusatzkühlung der Wärmequelle realisiert werden, ohne dass diese in großem Maße in die Eigenschaften der Luftkonditionierung der Klimaanlage beeinträchtigt. Je nach Priorität der Zusatzkühlung der Wärmequelle gegenüber der Luftkonditionierung der Fahrgastzelle kann es im Einzelfall jedoch auch vorgesehen sein, dass der zweite Verdampfer bzw. zweite Wärmetauscher vor dem ersten Verdampfer angeordnet ist. Auch eine Ventilsteuerung zur steuerbaren Vertauschung der Reihenfolge der Verdampfer ist denkbar.

Alternativ oder ergänzend dazu kann es vorgesehen sein, dass die Klimaanlage einen dem Verdampfer nachgeordneten Sammler, insbesondere einen Niederdruck-Sammler umfaßt, wobei der zweite Wärmetauscher und der Sammler in einer Baueinheit integriert sind. Dies spart Bauraum und Kosten durch die Zusammenfassung der Bauteile. Die Integration des zweiten Wärmetauschers in den Sammler kann vorfieilhaft so erfolgen, dass der zweite Wärmetauscher eine Leitung umfaßt, die in einem Innenraum des Sammlers angeordnet ist. Alternativ kann auch vorgesehen sein, dass der zweite Wärmetauscher in Form einer Ummantelung des Sammlers ausgebildet ist, wodurch kritische Verbindungsstellen vermieden werden, bei denen eine Leitung die Wandung des Sammlers durchgreift.

In einer bevorzugten Ausführungsform ist es vorgesehen, dass der Kältekreislauf ein Expansionsorgan zum Entspannen eines Kältemittels umfaßt, wobei das Expansionsorgan in Flußrichtung des Kältemittels vor dem zweiten Wärmetauscher angeordnet ist. Insbesondere bevorzugt ist dabei ein Temperaturfühler nach dem zweiten Wärmetauscher angeordnet. Dieser kann etwa einem thermostatischen Expansionsventil zugeordnet sein. Hierdurch kann sichergestellt werden, dass das den zweiten Wärmetauscher verlassende Kältemittel eine ausreichende Überhitzung aufweist, um eine flüssige Phase im Verdichter zu vermeiden. Falls nur verhältnismäßig kleine Kühlleistungen erforderlich sind oder auch weitere Sicherungsmaßnahmen zur hinsichtlich einer notwendigen Sauggas-Überhitzung getroffen werden, kann es im Einzelfall jedoch auch zweckmäßig sein, den Temperaturfühler vor dem zweiten Wärmetauscher anzuordnen.

Bevorzugt kann es weiterhin vorgesehen sein, dass das Kältemittel der Klimaanlage Kohlendioxid ist. Insbesondere in diesem Fall kann eine interner Wärmetauscher der Klimaanlage, wie er bei CO₂-Klimaanlagen üblich ist, als Baueinheit mit dem zweiten Wärmetauscher ausgebildet sein. Alternativ dazu kann die Klimaanlage jedoch auch mit einem konventionellen Kältemittel wie etwa R134a betrieben werden.

Vorteilhaft kann kann der zweite Wärmetauscher als Baueinheit mit einem Leitungsabschnitt der Klimaanlage ausgebildet sein, wobei besonders bevorzugt eine Anordnung von im Wesentlichen koaxialen Rohren möglich ist. Hierdurch wird kosten- und bauraumgünstig dem Umstand Rechnung getragen, dass der zweite Wärmetauscher gegebenenfalls lediglich eine Zusatzkühlleistung für die Wärmequelle bereitstellt.

In einer bevorzugten Ausführungsform ist zudem ein Steuermittel vorgesehen, mittels dessen eine thermische Last an dem für die Kühlung des Fahrgastraums zuständigen Verdampfer verringerbar ist. Besonders bevorzugt geschieht dies auf ein Zustandssignal der Wärmequelle hin. Dieses Zustandssignal kann ein Meßwert eines Temperatursensors sein, beispielsweise eines Sensors zur Messung der Kühlmitteltemperatur vor der Wärmequelle. Es kann sich alternativ oder ergänzend auch um einen Betriebsparameter der Wärmequelle selbst handeln, welcher etwa die an der Wärmequelle anliegende Leistung ist. Weiterhin können auch zeitliche Ableitungen der Kühlmitteltemperatur oder auch der anliegenden Leistung der Wärmequelle zu dem Zustandssignal beitragen. Insgesamt kann hierdurch auf einfache Weise eine Spitzenlast der Wärmequelle effektiv gekühlt werden, wobei zumindest bei kurzzeitigen Spitzenlasten keine spürbare Beeinträchtigung der Luftkonditionierung des Fahrgastraumes resultiert. Die Verringerung der Last des Verdampfers kann etwa durch Reduzierung eines Luftstromes oder auch durch Umschalten auf Umluftbetrieb erfolgen.

Weitere Vorteile und Merkmale des erfindungsgemäßen Fahrzeug-Kühlsystems ergeben sich aus den nachfolgend geschilderten Ausführungsbeispielen und aus den abhängigen Ansprüchen.

Nachfolgend werden fünf bevorzugte Ausführungsbeispiele eines erfindungsgemäßen Fahrzeug-Kühlsystems beschrieben und anhand der anliegenden Zeichnungen näher erläutert.
- Fig. 1: zeigt eine schematische Darstellung eines ersten Ausführungsbeispiels eines erfindungsgemäßen Fahrzeug-Kühlsystems.
- Fig. 2: zeigt eine schematische Darstellung eines zweiten Ausführungsbeispiels eines erfindungsgemäßen Fahrzeug-Kühlsystems.
- Fig. 3: zeigt eine schematische Darstellung eines dritten Ausführungsbeispiels eines erfindungsgemäßen Fahrzeug-Kühlsystems, wobei ein Sammler und der zweite Wännetauscher als bauliche Einheit ausgebildet sind.
- Fig. 4: zeigt eine schematische Darstellung eines vierten Ausführungsbeispiels eines erfindungsgemäßen Fahrzeug-Kühlsystems, wobei ein Sammler und der zweite Wärmetauscher als bauliche Einheit ausgebildet sind.
- Fig. 5: zeigt eine schematische Darstellung eines fünften Ausführungsbeispiels eines erfindungsgemäßen Fahrzeug-Kühlsystems, wobei in dem Kühlkreislauf weitere Wärmequellen vorgesehen sind.

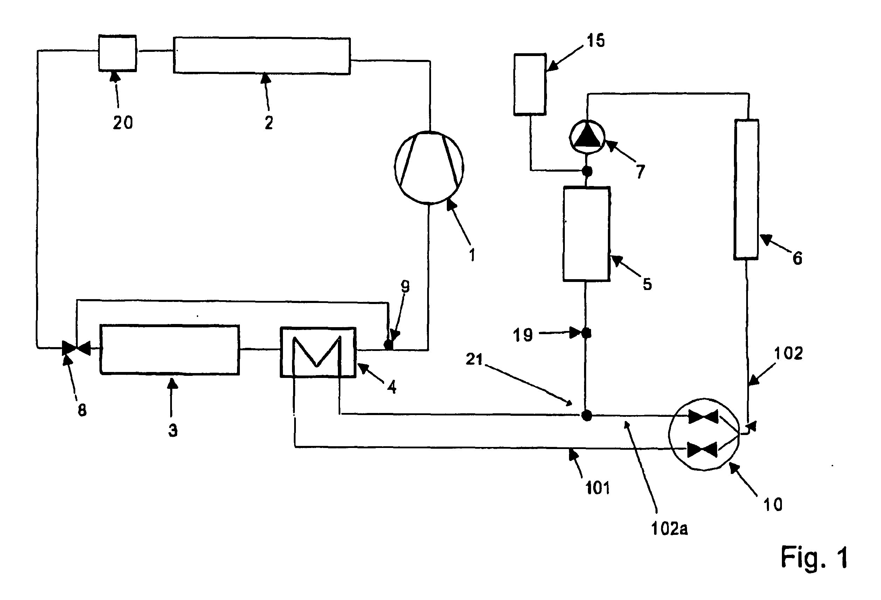

Das Ausführungsbeispiel gemäß Fig. 1 zeigt eine Klimaanlage eines Kraftfahrzeugs, die in Reihenfolge des Kältemittelflusses einen Verdichter 1, einen Kondensator 2, einen Hochdrucksammler 20, ein Expansionsorgan 8, einen ersten Verdampfer 3, einen zweiten Verdampfer 4 und einen Temperaturfühler 9 mit optionalem Druckfühler umfaßt. Der Temperaturfühler 9 ist dabei über eine Linie mit dem Expansionsorgan 8 verbunden, was die Regelung des Expansionsorgans als Funktion einer gemessenen Überhitzung nach dem Stand der Technik ausdrücken soll. Durch diese Regelung ist sichergestellt, dass im vorgesehenen Bereich überhitztes Kältemittel von dem Kompressor angesaugt wird.

Der erste Verdampfer 3 ist als üblicher Verdampfer einer Klimaanlage, an dessen Oberfläche die zu einer Fahrgastzelle geführte Luft gekühlt wird, ausgebildet.

Der zweite Verdampfer 4 ist dem ersten Verdampfer nachgeordnet. Er ist zugleich als ein Wärmetauscher 4 ausgebildet, mittels dessen die Klimaanlage mit einem Kühlkreislauf in thermischem Kontakt steht.

Der Kühlkreislauf umfaßt in Flußrichtung eines Kühlmittels nacheinander einen Temperatursensor 19, eine Wärmequelle 5, einen Kühlmittelausgleichsbehälter 15, eine Umlaufpumpe 7, und einen Kühler 6. Der Kühler 6 ist ein erster Wärmetauscher des Kühlkreislaufs. Bei dem Kühler 6 kann es sich etwa um einen Außenluftkühler handeln oder auch um einen Wärmetauscher, der an einen anderen Kühlkreis des Fahrzeugs angebunden ist. Dies kann eine rein thermische Anbindung sein, es kann sich bei dem Kühlkreislauf aber auch um einen Haupt- oder Nebenzweig eines Motorkühlkreises handeln.

Nach dem Kühler 6 erfolgt eine Verzweigung des Kühlkreislaufs in einen ersten Zweig und einen zweiten Zweig, wobei den Zweigen jeweils ein erster Kühlmittelfluß und ein zweiter Kühlmittelfluß zugeordnet ist. Der erste Zweig entspricht dabei einer Hauptleitung 102, die aus dem Kühler austritt und gemäß der zuvor beschriebenen Anordnung jederzeit die volle Menge an Kühlmittel führt, das zuvor die Wärmequelle 5 in thermischem Kontakt passiert und diese somit gekühlt hat.

Von der Hauptleitung zweigt dann eine Nebenleitung 101 ab. Im Bereich des Abzweigs ist eine Ventilsteuerung 10 in die Leitungen 101, 102 integriert. Mittels der Ventilsteuerung 10 ist ein Anteil an Kühlmittelfluß einstellbar, der durch die Nebenleitung fließt. Somit ist das Verhältnis der Kühlmittelflüsse von Hauptleitung zu Nebenleitung stets größer oder gleich eins.

Die Nebenleitung führt zu dem zuvor beschriebenen zweiten Verdampfer 4 der Klimaanlage, der ein zweiter Wärmetauscher 4 des Kühlkreislaufs ist. Somit wird der zweite Kühlmittelfluß bzw. diejenige Menge an Kühlmittel, die die Nebenleitung 101 durchströmt, durch thermischen Kontakt mit dem Kältemittel der Klimaanlage zusätzlich gekühlt.

Dieses Kühlmittel fließt nach Verlassen des zweiten Wärmetauschers 4 in einem Zweigpunkt 21 wieder mit dem nicht in die Leitung 101 gesteuerten Kühlmittel zusammen, welches die Ventilsteuerung 10 über eine Leitung 102a verlassen hat.

Die Ventilsteuerung 10 umfaßt zumindest ein steuerbares Ventil. Ein solches Ventil kann beispielsweise ein 312-Wegeventil, ein 4/2-Wegeventil oder ein diskretes Schaltventil sein. Das Ventil kann kontinuierlich verstellbar oder auch getaktet ansteuerbar sein. Die Ventilsteuerung 10 wird vorliegend von einer Regelelektronik (nicht dargestellt) angesteuert, wobei das Steuerungssignal in Abhängigkeit von dem Temperaturwert des Temperatursensors 19 ermittelt wird. Insbesondere um eine möglichst rechtzeitige erhöhte Kühlleistung bereitzustellen kann es zudem vorgesehen sein, Zustandsparameter der Wärmequelle 5 hinzuzuziehen. Handelt es sich bei der Wärmequelle 5 etwa um die Leistungselektronik eines elektrischen Antriebs eines Hybridfahrzeugs, so kann ein ausreichend schneller und großer Anstieg der anliegenden Leistung sofort in eine erhöhte Kühlleistung durch Vergrößerung des zweiten Kühlmittelflusses umgesetzt werden. Dies bietet einen zeitlichen Vorteil und führt zu einer deutlich geringeren Schwankung der Temperatur der Leistungselektronik 5. Hierdurch ist insgesamt eine größere Lebensdauer der Bauteile und besserer Wirkungsgrad des Antriebs ermöglicht.

Auch bei maximaler Einstellung der Kühlleistung hinsichtlich der Ventilsteuerung 10, d.h. wenn die Nebenleitung 101 den vollen Kühlmittelfluß der Leitung 102 aufweist, kann eine weitere Erhöhung der Kühlleistung des Systems dadurch erreicht werden, dass die Last an dem ersten Verdampfer 3 der Klimaanlage reduziert wird, also weniger gekühlte Luft in das Fahrzeuginnere geleitet wird oder etwa zeitweise auf Umluftbetrieb geschaltet wird. Hierdurch lassen sich wiederum verbessert kurzzeitig anfallende Spitzenlasten der Wärmequelle 5 auffangen. Aus diesen und anderen Gründen ist zweckmäßig eine integrierte elektronische Steuerung von Klimaanlage und Kühlkreislauf vorgesehen. Ein für die Änderung der Verdampferlast relevantes Zustandsignal wird dabei bevorzugt dann erzeugt, wenn der Temperatursensor 19 die Übertretung eines Schwellwertes anzeigt. Weiterhin kann das Zustandssignal dann erzeugt werden, wenn ein Anstieg der vom Sensor 19 gemessenen Temperatur besonders schnell erfolgt. Zudem kann das Zustandssignal alternativ oder ergänzend dazu dann erzeugt werden, wenn ein Betriebsparameter der Wärmequelle 5, insbesondere die anliegende Leistung bzw. die Ströme einer Leistungselektronik, einen entsprechenden gesteigerten Bedarf an Kühlleistung indizieren.

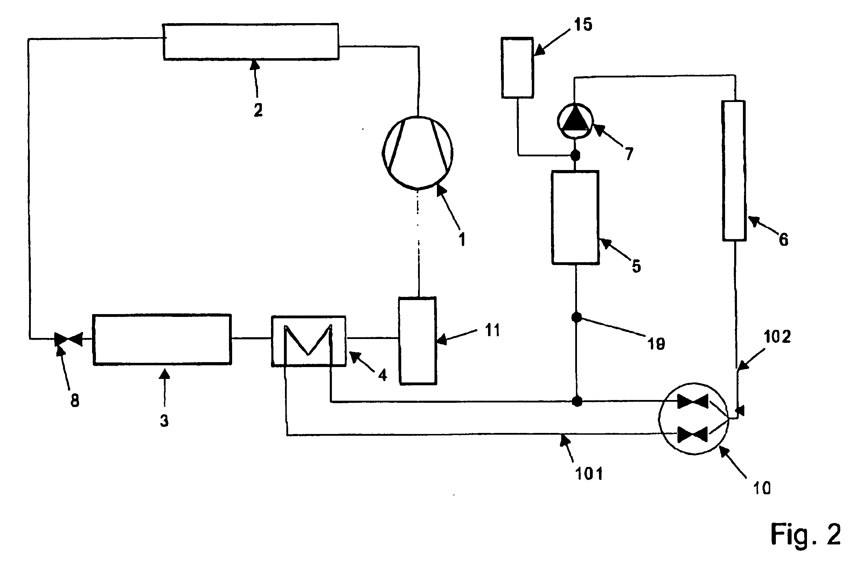

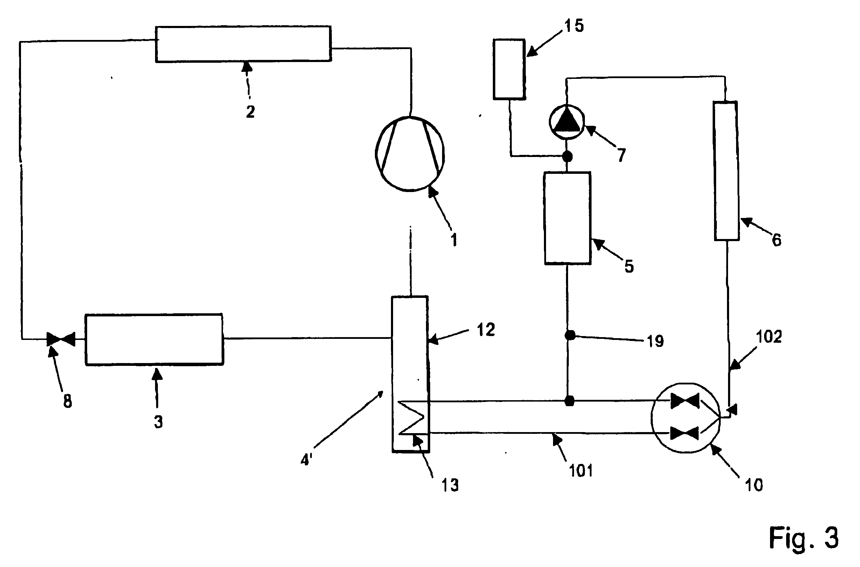

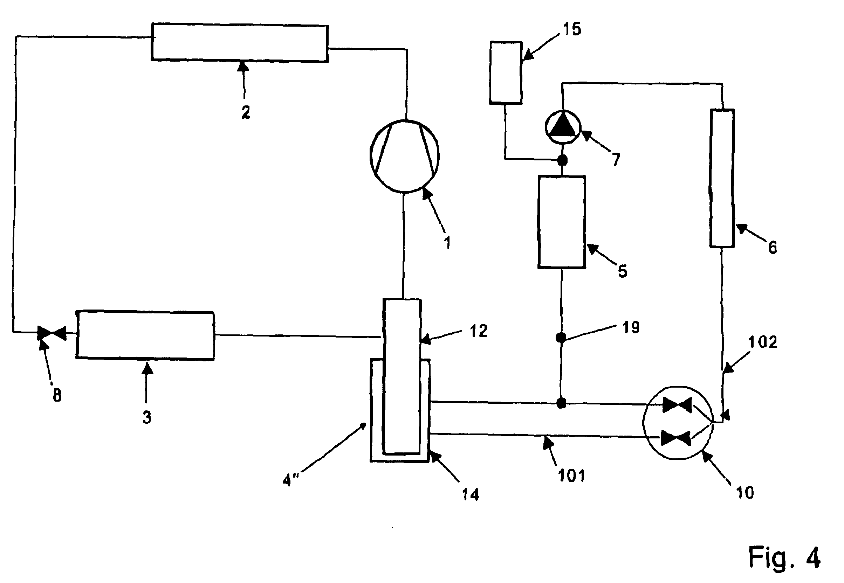

Das zweite Ausführungsbeispiel gemäß Fig. 2 unterscheidet sich von dem ersten Ausführungsbeispiel nur dadurch, dass anstelle des thermostatischen Expansionsventils nunmehr ein herkömmliches Orifice als Expansionsorgan 8 vorgesehen ist. Dementsprechend ist auch ein Niederdrucksammler 11 vorgesehen, der den beiden Verdampfern 3, 4 nachgeordnet ist. Zudem ist der Hochdrucksammler 20 des ersten Ausführungsbeispiels entfallen. Da bei diesem Typ von Orifice-Klimaanlagen regelmäßig eine Leitung zwischen dem ersten Verdampfer 3 und dem Sammler 11 besteht, kann es zweckmäßig sein, den zweiten Wärmetauscher 4 als Koaxialrohr auszubilden. Auf diese Weise ist auch eine kostengünstige Einbindung eines zusätzlichen Wärmetauschers 4 in bestehende Komponenten von Klimaanlagen möglich. Grundsätzlich muß der zweite Wärmetauscher 4 kein Verdampfer im eigentlichen Sinne sein, wie auch die nachfolgend beschriebenen Ausführungsbeispiele gemäß Fig. 3 und Fig. 4 zeigen.

Die erwähnte Ausbildung des zweiten Wärmetauschers 4 als Koaxialrohr mit einem Leitungsabschnitt des Kältekreises der Klimaanlage ist nicht auf das zweite Ausführungsbeispiel beschränkt, sondern kann insbesondere auch bei dem ersten Ausführungsbeispiel gemäß Fig. 1 realisiert sein, wobei der als Wärmetauscher ausgebildete Leitungsabschnitt sich bevorzugt, aber nicht notwendig zwischen erstem Verdampfer 3 und dem Temperaturfühler 9 befindet. Allgemein kann eine Ausbildung des zweiten Wärmetauschers als Leitungsabschnitt der Klimaanlage auch mittels einer anderen üblichen Anordnung als einem Koaxialrohr erfolgen, etwa durch Umwickeln einer Leitung des Kältekreises der Klimaanlage mit einer Leitung des Kühlkreises oder auch durch paralleles Verschweißen der entsprechenden Leitungsabschnitte.

Das dritte Ausführungsbeispiel gemäß Fig. 3 unterscheidet sich von dem zweiten Ausführungsbeispiel dadurch, dass ein zweiter Wärmetauscher 4' vorliegt, der mit einem Niederdrucksammler 12 als integriertes Bauteil ausgebildet ist. Im wesentlichen umfaßt der Wärmetauscher 4' einen Sammlerbehälter 12, der in einem Bodenbereich, in dem sich im Regelfall flüssiges Kältemittel der Klimaanlage befindet, von einem Leitungsabschnitt 13 der Nebenleitung 101 durchlaufen wird. Diese Leitung 13 ist zweckmäßig als Wendel ausgebildet, um eine ausreichend große Oberfläche im Kontakt mit dem Kältemittel aufzuweisen.

Das vierte Ausführungsbeispiel gemäß Fig. 4 unterscheidet sich von dem dritten Ausführungsbeispiel lediglich in der Art der Ausführung des integrierten Wärmetauschers 4". Dabei ist ein Sammlerbehälter 12 teilweise innerhalb einer geschlossenen Ummantelung 14 angeordnet, wobei die Ummantelung 14 einen Teil der Nebenleitung 101 ausbildet.

Insbesondere das dritte und das vierte Ausführungsbeispiel tragen dem Umstand Rechnung, dass im Fall der Kühlung eines Hybridfahrzeugs die Temperaturdifferenzen zwischen dem Kältemittel der Klimaanlage und dem Kühlmittel des Kühlkreises hoch sind, so dass der zweite Wärmetauscher generell sehr kompakt ausgebildet sein kann.

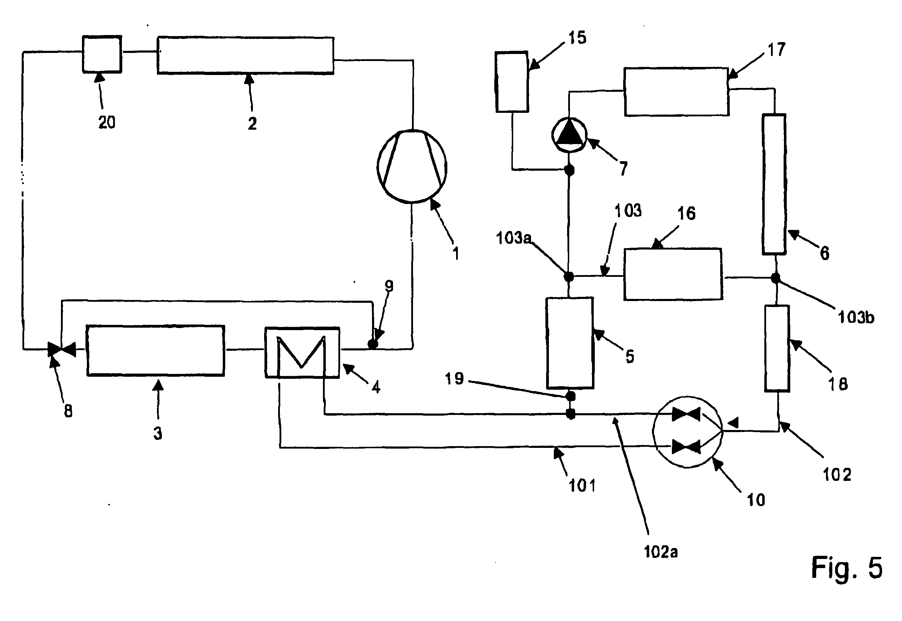

Das fünfte Ausführungsbeispiel gemäß Fig. 5 entspricht hinsichtlich der Klimaanlage im Wesentlichen dem ersten Ausführungsbeispiel, wobei ein Kühlkreislauf mit Thermostatischem Expansionsventil dargestellt ist, jedoch auch ein Kühlkreislauf mit Orifice und Niederdrucksammler vorgesehen sein kann. Weitergehende Unterschiede sind jedoch im Bereich des Kühlkreislaufs vorhanden: Der Kühlkreislauf umfaßt eine weitere zweite Wärmequelle 16 sowie eine weitere dritte Wärmequelle 17.

Die dritte Wärmequelle 17 ist dabei seriell zwischen der Umlaufpumpe 7 und dem Kühler 6 angeordnet. Die zweite Wärmequelle 16 ist in einem Kühlmittelzweig 103 angeordnet, der von einem Abzweig 103a zwischen erster Wärmequelle 5 und Umlaufpumpe 7 bis zu einem Abzweig 103b unmittelbar hinter dem Kühler 6 verläuft. Zwischen dem Abzweig 103b und der Ventilsteuerung 10 ist zudem ein Zusatzkühler 18 angeordnet.

In dem Abzweigen 103a und/oder 103b kann eine Steuerventileinrichtung vorgesehen sein, mittels der der Teilfluß von Kühlmittel durch den Zweig 103 und die zweite Wärmequelle 16 regelbar einstellbar ist. Gemäß dem Druckabfall über dem Kühlkreis fließt dabei vorliegend das Kühlmittel in dem Zweig 103 von dem Abzweig 103b zum Abzweig 103a hin. Die zweite Wärmequelle 16 kann insbesondere ein Verbrennungsmotor sein, so dass der Kühlkreislauf in diesem Fall der Hauptkühlkreislauf des Fahrzeugs und der Kühler 6 der Hauptkühler ist.

Der Zusatzkühler 18 kühlt lediglich den Teil des Kühlmittels, der mit der ersten Wärmequelle 5, die insbesondere die Leistungselektronik eines Hybridantriebs ist, in thermischen Kontakt kommt. Somit würde dieses Kühlmittel im allgemeinen bereits eine niedrigere Temperatur aufweisen als das der zweiten Wärmequelle 16 zugeführte Kühlmittel.

Hinsichtlich des Nebenzweigs 101, seiner Ansteuerung und seiner Anbindung an die Klimaanlage ist die Funktion des fünften Ausführungsbeispiels entsprechend der des ersten Ausführungsbeispiels.

Es versteht sich, dass die jeweiligen Merkmale der Ausführungsbeispiele je nach gestellten Anforderungen weitgehend untereinander kombinierbar sind.

## Patentansprüche

1. Fahrzeug-Kühlsystem, insbesondere für ein Elektro- oder Hybridfahrzeug, umfassend
eine Klimaanlage zur Luftkonditionierung einer Fahrgastzelle, wobei die Klimaanlage zumindest einen Verdichter (1), einen Kondensator (2), ein Expansionsorgan (8) zum Entspannen eines Kältemittels und einen Verdampfer (3) umfaßt, die von einem Kältemittel durchströmt werden,
eine Wärmequelle (5) des Fahrzeugs,
einen mit der Wärmequelle (5) in thermischem Kontakt stehenden Kühlkreislauf mit einem ersten Wärmetauscher (6) zur Kühlung eines Kühlmittels des Kühlkreislaufs, und
einen zweiten, von dem Kühlmittel und dem Kältemittel durchströmbaren Wärmetauscher (4, 4', 4"), mittels dessen die Klimaanlage und der Kühlkreislauf in thermischem Kontakt stehen,
wobei ein Verhältnis zwischen einem ersten Kühlmittelfluß (102) durch den ersten Wärmetauscher (6) und einem zweiten Kühlmittelfluß (101) durch den zweiten Wärmetauscher (4, 4', 4") mittels eines Regelkreises einstellbar ist und der Kältemittelfluß in der Klimaanlage in der Reihenfolge Verdichter (1), Kondensator (2), Verdampfer (3) und zweiter Wärmetauscher (4, 4', 4") erfolgt, wobei die Klimaanlage ein Expansionsorgan (8) zum Entspannen eines Kältemittels umfasst, wobei das Expansionsorgan (8) in Flußrichtung des Kältemittels vor dem zweiten Wärmerauscher (4, 4', 4") angeordnet ist und **dadurch gekennzeichnet, dass** ein Steuermittel vorgesehen ist, mittels dessen eine thermische Last an dem Verdampfer (3) der Klimaanlage anssteuerbar verringerbar ist, so dass weniger gekühlte Luft in das Fahrzeuginnere leitbar ist oder zeitweise auf Umluftbetrieb schaltbar ist, wenn der zweite Kühlmittelfluß (101) dem vollen ersten Kühlmittelfluß (102) entspricht.

2. Fahrzeug-Kühlsystem nach dem Oberbegriff von Anspruch 1, **dadurch gekennzeichnet, dass**, ein Niederdrucksammler (11, 12, 13) dem Verdampfer und dem zweiten Wärmetauscher (4) nachgeordnet oder mit dem zweiten Wärmetauscher (4', 4") in einer Baueinheit integriert ist.

3. Fahrzeugs-Külsystem nach Anspruch 1 oder 2, **dadurch gekennzeichnet, dass** der Regelkreis einen Temperatursensor (19) umfaßt.

4. Fährzeug-Kuhlsystem nach einem der vorhergehenden Ansprüche, **dadurch gekennzeichnet, dass** der Regelkreis zumindest ein steuerbares Ventil (10) zur Einstellung des Verhältnisses der Kühlmittelflüsse umfaßt.

5. Fahrzeug-Kühlsystem nach einem der vorhergehenden Ansprüche, **dadurch gekennzeichnet, dass** der erste Kühlmittelfluß (102) jederzeit größer oder gleich groß ist als der zweite Kühlmittelfluß (101).

6. Fahrzeug-Kühlsystem nach einem der vorhergehenden Ansprüche, **dadurch gekennzeichnet, dass** der Kühlkreislauf in thermischem Kontakt mit einer zweiten Wärmequelle (16, 17) steht.

7. Fahrzeug-Kühlsystem nach Anspruch 6, **dadurch gekennzeichnet, dass** die zweite Wärmequelle (17) in dem Kühlkreislauf seriell zu der ersten Wärmequelle (5) angeordnet ist.

8. Fahrzeug-Kühlsystem nach Anspruch 6, **dadurch gekennzeichnet, dass** die zweite Wärmequelle (16) in dem Kühlkreislauf abzweigend zu der ersten Wärmequelle angeordnet ist, wobei ein der zweiten Wärmequelle zugeordneter Zweig (103) des Kühlkreislaufs mittels zumindest eines steuerbaren Regelventils (103a, 103b) regelbar ist.

9. Fahrzeug-Kühlsystem nach einem der Ansprüche 6 bis 8, **dadurch gekennzeichnet, dass** in dem Kühlkreislauf ein weiterer Wärmetauscher (18) vorgesehen ist, der mit der Klimaanlage nicht in thermischem Kontakt steht.

10. Fahrzeug-Kühlsystem nach einem der vorhergehenden Ansprüche, **dadurch gekennzeichnet, dass** die die Klimaanlage einen weiteren Verdampfer (4) umfaßt, wobei der zweite Wärmetauscher an dem weiteren Verdampfer ausgebildet ist.

11. Fahrzeug-Kühlsystem nach einem der Ansprüche 2 bis 10, **dadurch gekennzeichnet, dass** der zweite Wärmetauscher (4') eine Leitung (13) umfaßt, die in einem Innenraum des Sammlers (12) angeordnet ist.

12. Fahrzeug-Kühlsystem nach Anspruch 11, **dadurch gekennzeichnet, dass** der zweite Wärmetauscher (4") in Form einer Ummantelung (14) des Sammlers (13) augebildet ist.

13. Fahrzeug-Kühlsystem nach einem der Ansprüche 1 bis 10, **dadurch gekennzeichnet, dass** der zweite Wärmetauscher (4) als Baueinheit mit einem Leitungsabschnitt der Klimaanlage ausgebildet ist.

14. Fahrzeug-Kühlsystem nach Anspruch 13, **dadurch gekennzeichnet, dass** der zweite Wärmetauscher als im wesentlichen koaxiales Rohr ausgebildet ist.

15. Fahrzeüg-Kühlsystem nach einem der vorhergehenden Ansprüche, **dadurch gekennzeichnet, dass** ein Kältemittel der Klimaanlage Kohlendioxid ist.

16. Fahrzeug-Kühlsystem nach einem der Ansprüche 1 bis 15, **dadurch gekennzeichnet, dass** ein Kältemittel der Klimaanlage ein konventionelles Kältemittel wie etwa R134a ist.

17. Fahrzeug-Kühlsystem nach Anspruch 16, **dadurch gekennzeichnet, dass** die thermische Last in Reaktion auf ein Zustandssignal der Wärmequelle (5) verringerbar ist.

18. Fahrzeug-Kühlsystem nach Anspruch 17, **dadurch gekennzeichnet, dass** das Zustandssignal von einem Meßwert eines Temperatursensors (19) abhängig ist.

19. Fahrzeug-Kühlsystem nach Anspruch 17 oder 18, **dadurch gekennzeichnet, dass** das Zustandsignal von einem Betriebsparameter der Wärmequelle (5), insbesonder einer anliegenden elektrischen Leistung, abhängig ist.

## Claims

1. A vehicle cooling system, in particular for an electrically operated or hybrid vehicle, comprising
an air conditioning system for conditioning the air of a passenger compartment, wherein the air conditioning system comprises at least one compressor (1), a condenser (2), an expansion device (8) for expanding a refrigerant, and an evaporator (3), through which a refrigerant flows, a heat source (5) of the vehicle,
a cooling circuit having thermal contact with the heat source (5), comprising a first heat exchanger (6) for cooling a coolant of the cooling circuit, and
a second heat exchanger (4, 4', 4") through which the coolant and the refrigerant can flow, via which the air conditioning system and the cooling circuit are in thermal contact, wherein a ratio between a first coolant flow (102) through the first heat exchanger (6) and a second coolant flow (101) through the second heat exchanger (4, 4', 4") can be adjusted using a control loop, and the refrigerant flow in the air conditioning system takes place in the sequence compressor (1), condensor (2), evaporator (3), and second heat exchanger (4, 4', 4"), wherein the air conditioning system includes an expansion device (8), for expanding a refrigerant, wherein the expansion device (8) is disposed upstream of the second heat exchanger (4, 4', 4") relative to the direction of flow of the refrigerant, and
**characterized in that** a control means is provided, using which a thermal load on the evaporator (3) of the air conditioning system can be reduced in a controllable manner, and therefore less cooled air can be directed into the vehicle interior when the second coolant flow (101) corresponds to the full first coolant flow (102).

2. The vehicle cooling system according to the preamble of claim 1, **characterized in that** a low-pressure accumulator (11, 12, 13) is disposed downstream of the evaporator and the second heat exchanger (4), or is integrated with the second heat exchanger (4', 4") in one assembly,

3. The vehicle cooling system according to claim 1 or 2, **characterised in that** the control loop includes a temperature sensor (19).

4. The vehicle cooling system according to one of the preceding claims, **characterised in that** the control loop includes at least one controllable valve (10) for adjusting the ratio of the coolant flows.

5. The vehicle cooling system according to one of the preceding claims, **characterized in that** the first coolant flow (102) is always greater than or equal to the second coolant flow (101).

6. The vehicle cooling system according to one of the preceding claims, **characterized in that** the cooling circuit is in thermal contact with a second heat source (16, 17).

7. The vehicle cooling system according to claim 6, **characterized in that** the second heat source (17) is disposed in the cooling circuit in series relative to the first heat source (5).

8. The vehicle cooling system according to claim 6, **characterized in that** the second heat source (16) is disposed in the cooling circuit such that it branches off relative to the first heat source, wherein a branch (103) of the cooling circuit assigned to the second heat source can be regulated using at least one controllable regulating valve (103a, 103b).

9. The vehicle cooling system according to one of the claims 6 to 8, **characterized in that** a further heat exchanger (18) which is not in thermal contact with the air conditioning system is provided in the cooling circuit.

10. The vehicle cooling system according to one of the preceding claims, **characterized in that** the air conditioning system comprises a further evaporator (4), wherein the second heat exchanger is formed on the further evaporator.

11. The vehicle cooling system according to one of the claims 2 to 10, **characterized in that** the second heat exchanger (4') includes a line (13) disposed in an interior space of the accumulator (12).

12. The vehicle cooling system according to claim 11, **characterized in that** the second heat exchanger (4") is in the form of a casing (14) of the accumulator (13).

13. The vehicle cooling system according to one of the claims 1 to 10, **characterized in that** the second heat exchanger (4) is in the form of an assembly having a line section of the air conditioning system.

14. The vehicle cooling system according to claim 13, **characterized in that** the second heat exchanger is in the form of a substantially coaxial tube.

15. The vehicle cooling system according to one of the preceding claims, **characterized in that** a refrigerant of the air conditioning system is carbon dioxide.

16. The vehicle cooling system according to one of the claims 1 to 15, **characterized in that** a refrigerant of the air conditioning system is a conventional refrigerant such as R134a.

17. The vehicle cooling system according to claim 16, **characterized in that** the thermal load can be reduced in response to a state signal of the heat source (5).

18. The vehicle cooling system according to claim 17, **characterized in that** the state signal is dependent upon a measured value of a temperature sensor (19).

19. The vehicle cooling system according to claim 17 or 18, **characterized in that** the state signal is dependent upon an operating parameter of the heat source (5), in particular electrical output that is present.

## Revendications

1. Système de refroidissement d'un véhicule, en particulier pour un véhicule électrique ou hybride, comprenant :
un système de climatisation pour le conditionnement d'air de l'habitacle d'un véhicule, où le système de climatisation comprend au moins un compresseur (1), un condenseur (2), un détendeur (8) servant à détendre un fluide frigorigène, et un évaporateur (3), qui sont traversés par un fluide frigorigène,
une source de chaleur (5) du véhicule
un circuit de refroidissement en contact thermique avec à source de chaleur (5), avec un premier échangeur de chaleur (6) servant au refroidissement d'un liquide de refroidissement du circuit de refroidissement, et
un deuxième échangeur de chaleur (4, 4', 4'') pouvant être traversé par le liquide de refroidissement et le fluide frigorigène, échangeur de chaleur au moyen duquel le système de climatisation et le circuit de refroidissement sont en contact thermique,
où, au moyen d'un circuit de réglage, on peut régler un rapport existant entre un premier flux de liquide de refroidissement (102) circulant à travers le premier échangeur de chaleur (6), et un deuxième flux de liquide de refroidissement (101) circulant à travers le deuxième échangeur de chaleur (4, 4', 4''), et le flux de fluide frigorigène circulant dans le système de climatisation traverse successivement le compresseur (1), le condenseur (2), l'évaporateur (3) et le deuxième échangeur de chaleur (4, 4', 4''),
or le système de climatisation comprend un détendeur (8) servant à détendre un fluide frigorigène,
où le détendeur (8) est disposé, dans la direction d'écoulement du fluide frigorigène, en amont du deuxième échangeur de chaleur (4, 4', 4''), et
**caractérisé en ce qu'**il est prévu un moyen de commande à l'aide duquel on peut réduire, de façon pilotable, une charge thermique s'appliquant à l'évaporateur (3) du système de climatisation, de sorte qu'une moins grande quantité d'air froid peut être dirigée dans l'habitacle du véhicule, ou bien, temporairement, on peut passer en mode de fonctionnement de circulation d'air ambiant lorsque le deuxième flux de liquide de refroidissement (101) correspond au premier flux total de liquide de refroidissement (103).

2. Système de refroidissement d'un véhicule selon le préambule de la revendication 1, **caractérisé en ce qu'**un collecteur à basse pression (11, 12, 13) est disposé en aval de l'évaporateur et du deuxième échangeur de chaleur (4), ou bien, avec le deuxième échangeur de chaleur (4', 4''), intégré à un ensemble unitaire.

3. Système de refroidissement d'un véhicule selon la revendication 1 ou 2, **caractérisé en ce que** le circuit de réglage comprend un capteur de température (19).

4. Système de refroidissement d'un véhicule selon l'une quelconque des revendications précédentes, **caractérisé en ce que** le circuit de réglage comprend au moins une soupape réglable (10) servant au réglage du rapport des flux de liquide de refroidissement.

5. Système de refroidissement d'un véhicule selon, l'une quelconque des revendications précédentes, **caractérisé en ce que** le premier flux de liquide de refroidissement (102) est toujours supérieur ou égal au deuxième flux de liquide de refroidissement (101).

6. Système de refroidissement d'un véhicule selon, l'une quelconque des revendications précédentes, **caractérisé en ce que** le circuit de refroidissement est en contact thermique avec une deuxième source de chaleur (16, 17),

7. Système de refroidissement d'un véhicule selon la revendication 6, **caractérisé en ce que** la deuxième source de chaleur (17) est disposée, dans le circuit de refroidissement, en série par rapport à la première source de chaleur (5).

8. Système de refroidissement d'un véhicule selon la revendication 6, **caractérisé en ce que** la deuxième source de chaleur (16) est disposée, dans le circuit de refroidissement, en dérivation par rapport à la première source de chaleur, où une dérivation (103) du circuit de refroidissement, associée à la deuxième source de chaleur, est réglable au moyen d'au moins une soupape de réglage (103a, 103b) pouvant être commandée.

9. Système de refroidissement d'un véhicule selon l'une quelconque des revendications 6 à 8, **caractérisé en ce qu'**il est prévu, dans le circuit de refroidissement, un autre échangeur de chaleur (18) qui n'est pas en contact thermique avec le système de climatisation.

10. Système de refroidissement d'un véhicule selon l'une quelconque des revendications précédentes, **caractérisé en ce que** le système de climatisation comprend un autre évaporateur (4), où le deuxième échangeur de chaleur est configuré sur l'autre évaporateur.

11. Système de refroidissement d'un véhicule selon l'une quelconque des revendications 2 à 10, **caractérisé en ce que** le deuxième échangeur de chaleur (4') comprend une conduite (13) qui est disposée dans un espace intérieur du collecteur (12).

12. Système de refroidissement d'un véhicule selon la revendication 11, **caractérisé en ce que** le deuxième échangeur de chaleur (4") est configuré sous la forme d'une enveloppe (14) du collecteur (12).

13. Système de refroidissement d'un véhicule selon l'une quelconque des revendications 1 à 10, **caractérisé en ce que** le deuxième échangeur de chaleur (4) est configuré comme un ensemble unitaire comportant une partie de conduite du système de climatisation,

14. Système de refroidissement d'un véhicule selon la revendication 13, **caractérisé en ce que** le deuxième échangeur de chaleur est configuré pratiquement comme un tube coaxial.

15. Système de refroidissement d'un véhicule selon l'une quelconque des revendications précédentes, **caractérisé en ce qu'**un fluide frigorigène du système de climatisation est du dioxyde de carbone,

16. Système de refroidissement d'un véhicule selon l'une quelconque des revendications 1 à 15, **caractérisé en ce qu'**un fluide frigorigène du système de climatisation est un fluide frigorigène conventionnel, comme par exemple du type R134a.

17. Système de refroidissement d'un véhicule selon la revendication 16, **caractérisé en ce que** la charge thermique peut être réduite en réaction à un signal d'état de la source de chaleur (5).

18. Système de refroidissement d'un véhicule selon la revendication 17, **caractérisé en ce que** le signal d'état dépend d'une valeur mesurée d'un capteur de température (19).

19. Système de refroidissement d'un véhicule selon la revendication 17 ou 18, **caractérisé en ce que** le signal d'état dépend d'un paramètre de fonctionnement de la source de chaleur (5), en particulier d'une puissance électrique s'appliquant.
